# EUROPÄISCHE PATENTANMELDUNG

(11) **EP 3 633 815 A1**
(43) Veröffentlichungstag der Anmeldung: **08.04.2020**
(21) Anmeldenummer: 19185474.4
(22) Anmeldetag: 10.07.2019
(51) Int. Cl.: H02J 3/32, H02J 3/38, H02J 3/14

(54) **STEUERUNG UND/ODER REGELUNG VON MICRO-GRIDS**

(30) Priorität: 05.10.2018 DE 102018124618
(71) Anmelder: Innogy SE, 45128 Essen (DE)
(72) Erfinder: Gaul, Armin, 59379 Selm (DE); Hermes, Roland, 45141 Essen (DE)
(74) Vertreter: Cohausz & Florack

(57) **Zusammenfassung**

Offenbart wird u. a. ein Verfahren, durchgeführt von einer Steuereinrichtung eines Micro-Grids, das Verfahren umfassend: Erhalten einer Fahrplaninformation indikativ für eine oder mehrere Prognosen über zumindest eine vorbestimmte Zeitperiode, mit der ein dem Micro-Grid vorgelagertes öffentliches Stromnetz über zumindest einen Ankopplungspunkt zwischen dem Micro-Grid und dem öffentlichen Stromnetz einen prognostizierten Mehr- oder Minderbedarf an elektrischer Energie zum Ausgleich anfordert; Bestimmen einer Steuerungsinformation indikativ für eine Steuerung und/oder Regelung von von dem Micro-Grid umfassten steuer- und/oder regelbaren Elementen; Ausführen der Steuerung und/oder Regelung der steuer- und/oder regelbaren Elemente basierend auf der Steuerungsinformation oder Ausgabe der Steuerungsinformation, so dass die Steuerung und/oder Regelung der Steuer- und/oder regelbaren Elemente des Micro-Grids veranlasst wird. Offenbart werden ferner eine Vorrichtung zur Ausführung und/oder Steuerung dieses Verfahrens, ein System mit einer oder mehreren Vorrichtungen zur Ausführung und/oder Steuerung dieses Verfahrens und ein Computerprogramm zur Ausführung und/oder Steuerung dieses Verfahrens durch einen Prozessor.

## Beschreibung

### Gebiet

Beispielhafte Ausführungsformen der Erfindung betreffen die Absicherung eines öffentlichen Stromnetzes durch ein Micro-Grid, wobei das Micro-Grid zur Aufrechterhaltung der Stabilität des öffentlichen Stromnetzes nutzbar ist.

### Hintergrund

Bei zwischen dem öffentlichen Stromnetz und einem Micro-Grid gemeinsam genutzter Infrastruktur bzw. gemeinsam genutzten Elementen (z. B. Leitungen) kann es zu Lastsituationen für das öffentliche Stromnetz kommen, in denen mindestens einer der beiden das gemeinsame Element nutzenden Partner (Netzbetreiber des öffentlichen Stromnetzes oder Betreiber des Micro-Grids) reagieren muss, um beispielsweise eine Überlastung oder sogar Schädigung des öffentlichen Stromnetzes bzw. des Micro-Grids zu vermeiden.

Das Micro-Grid ist eine zusammenhängende Einheit, die der Stromversorgung dient, sich jedoch vom öffentlichen Stromnetz bzw. Verteilnetz differenziert. Unabhängig von Micro-Grids werden bereits Bilanzkreise betrieben, die einen Verbrauch oder eine Erzeugung poolen, wobei deren Prognose- und Ausgleichsfehler durch den öffentlichen Netzbetreiber gedeckt werden bzw. eine Deckung des Mehr- oder Minderbedarfs an elektrischer Energie mittels des öffentlichen Stromnetzes ausgeglichen werden.

Aus Gasverteilnetzen ist es bekannt, Gas in einem oder mehreren Gasspeichern zu speichern. Das eingespeicherte Gas kann folglich bei entsprechendem Bedarf wieder in das Gasverteilnetz gespeist werden. Ferner kann beispielsweise zum Ausgleich eines prognostizierten Bedarfs, wobei eine reale Mehr- oder Mindermenge gegenüber der Prognose in dem Verteilnetz benötigt wird, eine Steuerung der Gas-Erzeugung erfolgen, wobei z. B. weniger Gas erzeugt wird, als dies ursprünglich geplant war. Die Steuerung des Gasverteilnetzes erfordert dabei eine zentrale Steuerung, so dass mittels sämtlicher Speicher und Erzeugungsanlagen der Ausgleich bewirkt werden kann. Dies ist bei Stromnetzen aufgrund der mitunter trägen Stromerzeugungsanlagen, wobei höchstens langsam die erzeugte Menge elektrischer Energie steuerbar ist, und nur einer begrenzten Speichermöglichkeit von bereits erzeugter elektrischer Energie, wesentlich schwieriger. Micro-Grids hingegen umfassen meist Stromerzeugungsanlagen von geringerer Kapazität, die schnell steuer- und/oder regelbar sind, wie etwa Mikro-Blockheizkraftwerke, und/oder Photovoltaikanlagen, um nur einige nicht-limitierende Beispiele zu nennen.

### Zusammenfassung einiger beispielhafter Ausführungsformen der Erfindung

Aufgrund der steigenden Anzahl von mit öffentlichen Stromnetzen verbundenen Micro-Grids wäre es, insbesondere um den Betriebsaufwand für das öffentliche Stromnetz überschaubar zu halten, wünschenswert, die Auswirkungen eines Micro-Grids auf das öffentliche Stromnetz möglichst gering zu halten. Des Weiteren wäre es wünschenswert, die in einem Micro-Grid verfügbaren Speicher und Erzeugungsanlagen für den Ausgleich eines Mehr- oder Minderbedarfs elektrischer Energie des öffentlichen Stromnetzes einzusetzen.

Gemäß einem ersten beispielhaften Aspekt der Erfindung wird ein Verfahren offenbart, das Folgendes umfasst:
- Erhalten einer Fahrplaninformation indikativ für eine oder mehrere Prognosen über zumindest eine vorbestimmte Zeitperiode, mit der ein dem Micro-Grid vorgelagertes öffentliches Stromnetz über zumindest einen Ankopplungspunkt zwischen dem Micro-Grid und dem öffentlichen Stromnetz einen prognostizierten Mehr- oder Minderbedarf an elektrischer Energie zum Ausgleich anfordert, so dass basierend auf der Fahrplaninformation eine Steuerung und/oder Regelung von von dem Micro-Grid umfassten steuer- und/oder regelbaren Elementen derart durchgeführt wird, dass der Mehr- oder Minderbedarf an elektrischer Energie ausgeglichen wird;
- Bestimmen einer Steuerungsinformation indikativ für eine Steuerung und/oder Regelung der von dem Micro-Grid umfassten steuer- und/oder regelbaren Elemente, wobei die Steuerungsinformation zumindest teilweise basierend auf der Fahrplaninformation und auf einem oder mehreren erfassten oder erhaltenen Stabilitätsparametern des übergeordneten öffentlichen Stromnetzes bestimmt wird, wobei der eine oder die mehreren Stabilitätsparameter indikativ für an dem zumindest einen Ankopplungspunkt einzuhaltende Stromparameter ist bzw. sind, so dass die Steuerungsinformation derart bestimmt ist, dass eine Differenz zwischen dem gemäß der Fahrplaninformation angeforderten Mehr- oder Minderbedarf an elektrischer Energie und der gemäß des einen oder der mehreren Stabilitätsparameter geforderten Stabilität des öffentlichen Stromnetzes bei der Steuerung oder Regelung der von dem Micro-Grid umfassten steuer- und/oder regelbaren Elemente berücksichtigt wird;
- Ausführen der Steuerung und/oder Regelung der steuer- und/oder regelbaren Elemente basierend auf der Steuerungsinformation oder Ausgabe der Steuerungsinformation, so dass die Steuerung und/oder Regelung der steuer- und/oder regelbaren Elemente des Micro-Grids veranlasst wird.

In einem Ausführungsbeispiel des ersten Aspekts der Erfindung umfasst das Verfahren das Erhalten der Fahrplaninformation, das Bestimmen der Steuerungsinformation und das Ausgeben der Steuerungsinformation(insbesondere an eine andere Vorrichtung, z. B. an ein Element des Micro-Grids). In einem anderen Ausführungsbeispiel des ersten Aspekts der Erfindung umfasst das Verfahren das Erfassen der Fahrplaninformation, das Bestimmen der Steuerungsinformation und das Ausführen der Steuerung und/oder Regelung basierend auf der Steuerungsinformation.

Gemäß einem zweiten beispielhaften Aspekt der Erfindung wird eine Vorrichtung offenbart, die zur Ausführung und/oder Steuerung des Verfahrens nach dem ersten Aspekt der Erfindung eingerichtet ist oder jeweilige Mittel zur Ausführung und/oder Steuerung der Schritte des Verfahrens gemäß dem ersten Aspekt der Erfindung umfasst. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.

Die Vorrichtung gemäß dem zweiten Aspekt der vorliegenden Erfindung ist insbesondere ein Bestandteil (z. B. Einrichtung) des Micro-Grids. Beispielsweise ist die Vorrichtung gemäß dem zweiten Aspekt der vorliegenden Erfindung von dem zumindest einen Ankoppelungspunkt, über den das Micro-Grid mit dem (öffentlichen) Stromnetz z. B. operativ (z. B. elektrisch) verbunden ist, umfasst oder an diesem derart operativ (z. B. elektrisch) angebunden, dass die Stabilitätsparameter von der Vorrichtung gemäß dem zweiten Aspekt der vorliegenden Erfindung an dem zumindest einen Ankoppelungspunkt erfasst bzw. ermittelt werden können. Alternativ oder zusätzlich ist die Vorrichtung gemäß dem zweiten Aspekt der vorliegenden Erfindung kommunikationstechnisch mit dem Micro-Grid verbunden oder kommunikationstechnisch von dem Micro-Grid umfasst, wie z. B. ein Server.

Gemäß einem dritten beispielhaften Aspekt der Erfindung wird eine Vorrichtung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem ersten Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Gemäß einem vierten beispielhaften Aspekt der Erfindung wird ein System offenbart, das eine oder mehrere Vorrichtungen umfasst, die eingerichtet sind zur Ausführung und/oder Steuerung des Verfahrens gemäß dem ersten Aspekt der Erfindung oder Mittel zur Ausführung und/oder Steuerung der Schritte des Verfahrens gemäß dem ersten Aspekt der Erfindung aufweisen. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

In einer beispielhaften Ausgestaltung umfasst das System gemäß dem vierten beispielhaften Aspekt der vorliegenden Erfindung:
- zumindest eine Vorrichtung nach dem zweiten Aspekt der vorliegenden Erfindung; und
- ein oder mehrere von einem über zumindest einen Ankopplungspunkt mit einem öffentlichen Stromnetz verbundenen Micro-Grid umfassten steuer- und/oder regelbaren Elemente;
- wobei die zumindest eine Vorrichtung und das eine oder die mehreren Elemente von dem Micro-Grid umfasst sind.

Gemäß einem fünften beispielhaften Aspekt der Erfindung wird ein Computerprogramm offenbart, das Programmanweisungen umfasst, die einen Prozessor zur Ausführung und/oder Steuerung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Diese fünf Aspekte der vorliegenden Erfindung weisen u. a. die nachfolgend beschriebenen - teilweise beispielhaften - Eigenschaften auf.

Ein Micro-Grid ist beispielsweise autark. Ein derartiges Micro-Grid ist Teil von einer sogenannten Local Energy Community (LEC). Eine derartige LEC ist beispielsweise ein Wohnquartier und umfasst sämtliche energietechnischen Elemente bzw. Infrastruktur(en) des Wohnquartiers. Eine derartige LEC kann beispielsweise bei einem Bilanzausgleich innerhalb des Micro-Grids zwischen Erzeugung und Verbrauch vorteilhaft sein, da beispielsweise in Deutschland dann keine Abgaben gemäß Erneuerbare-Energien-Gesetz (EEG) zu zahlen sind und deswegen derartige Modelle für die Bewohner eines solchen Wohnquartiers finanziell attraktiv sind.

Micro-Grids zeichnen sich insbesondere dadurch aus, dass eine räumliche Nähe zwischen der Erzeugung und dem Verbrauch der erzeugten Energie besteht, nämlich beispielsweise innerhalb eines Wohnquartiers.

Ferner wird im Sinne des vorliegenden Gegenstands insbesondere von dem Begriff "Micro-Grid" umfasst, dass nicht alle Elemente des Micro-Grid (z. B. Netzteile, Stromerzeugungsanlagen, Speicher, Lasten) vom selben Eigentümer sind, wie dies beispielsweise in konventionellen öffentlichen Stromnetzen regelmäßig der Fall ist, da beispielsweise sowohl Energieerzeugungsanlage als auch elektrische Leitungen, sowie Speicher dem Energieversorgungsunternehmen in der Regel gehören, zumindest aber von dem Energieversorgungsunternehmen betrieben werden. Im Gegensatz hierzu ist dies in einem Micro-Grid abweichend, da die strukturellen und/oder funktionellen Elemente, die von dem Micro-Grid umfasst sind, insbesondere mehreren Eigentümern gehören, oder zumindest von mehreren Eigentümern betrieben werden. Beispielsweise kann das Micro-Grid mehrere Energieerzeugungsanlagen (z. B. jeweils ausgebildet als Photovoltaikanlage) umfassen, die jeweils demjenigen Hauseigentümer gehören, auf dessen Hausdach sie installiert sind, um nur ein nicht-limitierendes Beispiel zu nennen. Die die Elemente des Micro-Grids verbindenden elektrischen Leitungen gehören beispielsweise der LEC gemeinsam, oder sind von städtischem Eigentum, um nur ein weiteres nicht-limitierendes Beispiel zu nennen. Ferner ist der zumindest eine Ankoppelungspunkt zwischen Micro-Grid und öffentlichem Stromnetz nicht fest definiert, sondern je nach Anforderung und/oder Bedarf kann dieser variieren bzw. variiert werden.

Ferner sind derartige Micro-Grids an einem übergeordneten Verteilnetz - im Sinne dieses Gegenstands auch als öffentliches Stromnetz oder übergeordnetes Stromnetz bezeichnet - gekoppelt. Das Micro-Grid selber ist nicht frequenzgesteuert. Micro-Grids sind beispielsweise ferner dadurch gekennzeichnet, dass die von dem Micro-Grid umfassten Bestandteile, wie etwa Erzeugungseinrichtungen und Leitungen, nicht von einem einzelnen Eigentümer sind, sondern sich das Micro-Grid aus Bestandteilen unterschiedlicher Eigentümer zusammensetzt.

Ein von dem Micro-Grid umfasstes Element ist beispielsweise eine Erzeugungseinrichtung bzw. Erzeugungsanlage (z. B. (Mikro) Blockheizkraftwerk, Windenergieanlage, Photovoltaikanlage, Gas-und-Dampf-Erzeugungsanlage, oder dergleichen, also eine zur Erzeugung von elektrischer Energie geeignete Einrichtung) und/oder eine Last (z. B. an von dem Micro-Grid umfassten (Strom-) Leitungen angeschlossene Verbraucher, wie elektrische Einrichtungen (Haushaltsgeräte (z. B. Kühlschrank und/oder Waschmaschine), Unterhaltungselektronik, um nur einige nicht-limitierende Beispiele zu nennen)).

Die Elemente des Micro-Grids bestehen oder umfassen mindestens steuerbare Lasten, die eine Rückwirkung/Fahrplanabweichung gegenüber der öffentlichen Versorgung durch das öffentliche Stromnetz im Sinne einer Bilanzverschiebung ausschließen können (z. B. durch die Steuerung der Lasten: Mehr- oder Minderverbrauch der Lasten bewirken, oder Last(en) komplett ausschalten, um nur einige nicht-limitierende Beispiele zu nennen). Typische Realisierungen werden daher beispielsweise entweder 100%ig regelbare Lasten oder eine Kombination aus Lasten, ggf. Speichern und steuerbaren Erzeugungseinheiten als Elemente des Micro-Grids umfassen.

Eine entsprechende von dem Micro-Grid umfasste steuer- und/oder regelbare Last kann beispielsweise eine wärme Anwendung sein, die z. B. speicherfähig, sowie steuerbar ist, so dass beispielsweise der Prozess unterbrechbar ist. Um nur einige nicht-limitierende Beispiele zu nennen umfassen derartige wärme Anwendungen z. B. das Betreiben eines Tauchsieders, eine Nachtspeicherheizung, einen Kühlgenerator, eine Klimaanlage, oder dergleichen. Eine entsprechende von dem Micro-Grid umfasste Steuer- und/oder regelbare Last kann beispielsweise eine Zwischengröße einer wärme Anwendung und einer konventionellen Last, die z. B. lediglich ein- und ausschaltbar ist sein. Dies kann beispielsweise eine Last aus Bereichen sein, in denen gesteuert und/oder geregelt werden kann, wie z. B. Bereiche von (z. B. Li-Ionen) Akkus, in denen ein Gestalten von Aufladeprozessen möglich ist (z. B. das Laden von einem Elektrofahrzeug).

In einer beispielhaften Ausgestaltung nach dem zweiten Aspekt ist die Vorrichtung räumlich nahe bzw. weist eine räumliche Nähe zu den von dem Micro-Grid umfassten steuer- und/oder regelbaren Elementen derart auf, dass keine Elemente des öffentlichen Stromnetzes zwischen diesen angeordnet sind.

Die Begriffe bzw. die Formulierungen "räumlich nahe" bzw. "räumliche Nähe" umfassen im Sinne des vorliegenden Gegenstands, dass die Vorrichtung in einem geographischen Umkreis von z. B. 10, 5, 4, 3, 2,1 km oder weniger zu zumindest einem weiteren Element des Micro-Grid angeordnet ist.

Der hier vorgeschlagene Micro-Grid-Ansatz unterscheidet sich von dem Stand der Technik insbesondere dadurch, dass aus den Elementen (z. B. Lasten, wie etwa Verbraucher, und/oder Erzeugungsanlagen) im Micro-Grid derart eine Einheit gebildet wird, dass keine Rückwirkungen auf die Bilanzierung des mit dem Micro-Grid verbundenen öffentlichen Netzes geschehen. Dies wird derart sichergestellt, indem beispielsweise die Steuereinrichtung, die das Verfahren nach dem ersten Aspekt der vorliegenden Erfindung durchführt, Messtechnik und/oder Aktoren umfasst, um nur einige nicht-limitierende Beispiele zu nennen, so dass durch die Steuereinrichtung eine zentrale oder durch mehrere Steuereinrichtungen (die von dem Micro-Grid umfasst sind) solcher, eine verteilte Intelligenz realisiert ist, so dass die entstehende Bilanz zu jedem Zeitpunkt (mindestens aber in den EVU (Energieversorgungsunternehmen)-typischen Messzyklen) gegenüber einem vorher angemeldeten Fahrplan, der zumindest teilweise von der Fahrplaninformation repräsentiert ist, exakt ausgeglichen wird. D. h. das Micro-Grid besteht mindestens aus derart steuerbaren und/oder regelbaren Lasten, dass eine Rückwirkung/Fahrplanabweichung gegenüber der öffentlichen Versorgung im Sinne einer Bilanzverschiebung ausgeschlossen werden kann. Typische Realisierungen werden beispielsweise 100%ig steuer- und/oder regelbare Lasten, oder eine Kombination aus solchen Lasten, ggf. Speichern und steuer- und/oder regelbaren Erzeugungsanlagen als Elemente des Micro-Grids umfassen.

Ein Micro-Grid kann ferner mehrere Ankoppelungspunkte zu dem übergeordneten Stromnetz aufweisen, wie in beispielhaften Ausgestaltungen nach allen Aspekten der vorliegenden Erfindung in dieser Beschreibung beschrieben ist. Ferner kann jedoch ein Micro-Grid auch autark, d. h. unabhängig vom (übergeordneten) öffentlichen Stromnetz betrieben werden. Der vorliegende Gegenstand betrifft insbesondere den Fall, dass eine operative (z. B. elektrische) Verbindung zwischen dem Micro-Grid und dem Stromnetz besteht.

Das Micro-Grid ist insbesondere nicht (mehr) frequenzsteuerbar in beispielhaften Ausgestaltungen nach allen Aspekten der vorliegenden Erfindung.

Die Fahrplaninformation umfasst oder repräsentiert beispielsweise eine Werteliste von mindestens einem Parameter. Alternativ oder zusätzlich umfasst oder repräsentiert die Fahrplaninformation beispielsweise einen oder mehrere Einzelwerte als Parameter, die z. B. als Gruppe gesamthaft oder einzeln übertragen werden können. Die Fahrplaninformation ist ferner beispielsweise indikativ für eine Vorgabe für mindestens einen Parameter des Micro-Grids bzw. des vorgelagerten Netzes (z. B. öffentliches Stromnetz) oder eines benachbarten Micro-Grids. Dieser mindestens eine Parameter ist beispielsweise ein Teil der Werteliste oder repräsentiert einen Einzelwert. Beispielsweise kann gemäß der Fahrplaninformation als Vorgabe der mindestens eine Parameter an zumindest einem Ankopplungspunkt des Micro-Grids zu dem vorgelagerten Netz (z. B. öffentliches Stromnetz) oder dem benachbarten Micro-Grid eingestellt werden, so dass der mindestens eine Parameter an dem zumindest einen Ankopplungspunkt z. B. entsprechend erfasst (z. B. gemessen) werden kann.

Die Fahrplaninformation repräsentiert beispielsweise EVU -typische Messzyklen, wie z. B. von der Dauer 1 min, 5 min, 10 min, 15 min, 20 min, 30 min, 1 Stunde, oder länger. Die Fahrplaninformation repräsentiert beispielsweise Mehr- oder Mindermengen elektrischer Energie, die gemäß dem sogenannten Ausgleichsenergiemarkt gehandelt wurden, und in dem entsprechenden Messzyklus in das Stromnetz eingespeist und/oder von mit dem Stromnetz verbundenen Lasten verbraucht werden sollten.

Unter der Stabilität des Stromnetzes im Sinne des vorliegenden Gegenstands wird insbesondere verstanden, dass die in dem Stromnetz herrschende Netzfrequenz konstant gehalten wird. Als Beispiel sei an dieser Stelle das europäische Versorgungsnetz als Stromnetz für Verbraucher angeführt, das stabil ist, wenn eine (Nenn-) Frequenz von 50 Hz vorliegt. Diese Frequenz kann durch ein Ab- bzw. Zuschalten und/oder eine Steuerung und/oder Regelung von Erzeugern und/oder Verbrauchen, wie etwa Lasten, erhöht bzw. verringert werden.

Das öffentliche Stromnetz ist beispielsweise ein Hoch- und/oder Mittelspannungsnetz. Das öffentliche Stromnetz wird beispielsweise auch als Verteilnetz bezeichnet.

Der Gegenstand ermöglicht unter anderem den technischen Effekt, wonach keine Bilanzverschiebung, die von Micro-Grid verursacht ist, (mehr) stattfindet. Bei einem Bilanzausgleich zwischen Erzeugung und Verbrauch sind ferner keine gesetzlichen Abgaben (z. B. gemäß dem Erneuerbare-Energien-Gesetz (EEG)) erforderlich. Das Bestimmen der Steuerungsinformation ist insbesondere abhängig von allen Lasten und Erzeugern, die von dem Micro-Grid umfasst sind.

Der eine oder die mehreren Stabilitätsparameter werden beispielsweise von einem Mittel (z. B. Messeinrichtung oder Sensorik) erfasst bzw. ermittelt, die bzw. das von dem zumindest einen Ankoppelungspunkt umfasst sind bzw. ist, oder aber die bzw. das auch derart mit dem zumindest einen Ankoppelungspunkt operativ (z. B. elektrisch) verbunden ist bzw. sind, dass eine Überwachung (z. B. Messung und/oder sensorische Überwachung) des zumindest einen Ankoppelungspunktes durchgeführt werden kann. Das Mittel (z. B. Messeinrichtung oder Sensorik) kann alternativ oder zusätzlich von der Steuereinrichtung, die von einem Micro-Grid umfasst ist, umfasst sein oder mit der Steuereinrichtung (z. B. elektrisch) verbindbar sein.

Der eine oder die mehreren Stabilitätsparameter des öffentlichen Stromnetzes umfassen oder repräsentieren beispielsweise Strom, Spannung, Frequenz oder dergleichen Parameter, die an dem zumindest einen Ankopplungspunkt erfasst bzw. ermittelt werden können. Der eine oder die mehreren Stabilitätsparameter sind beispielsweise indikativ für einen Stabilitätszustand des öffentlichen Netzes, also beispielsweise ob zur Gewährleistung der Versorgung durch das öffentliche Stromnetz eine definierte Menge elektrische Energie in das öffentliche Stromnetz eingespeist werden muss - auch als Mehrbedarf elektrischer Energie im Sinne des vorliegenden Gegenstands bezeichnet -, oder ob eine Menge von dem öffentlichen Stromnetz (z. B. in das Micro-Grid) ausgespeist werden muss - auch als Minderbedarf elektrischer Energie im Sinne des vorliegenden Gegenstands bezeichnet.

Alternativ oder zusätzlich können der eine oder die mehreren Stabilitätsparameter erhalten werden, z. B. in dem der eine oder die mehreren Stabilitätsparameter mittels einer Kommunikationsschnittstelle (z. B. umfasst von der Steuereinrichtung oder mit dieser (z. B. elektrisch) verbindbar) empfangen werden. Der eine oder die mehreren Stabilitätsparameter werden beispielsweise von einer (z. B. zentralen) Einrichtung des öffentlichen Stromnetzes gesendet (z. B. von einer Netzleitstelle des öffentlichen Stromnetzes).

Die Ausgabe bzw. die Veranlassung von deren Ausgabe erfolgt beispielsweise, indem die Steuerungsinformation an zumindest ein Element des Micro-Grids übermittelt wird. Z. B. kann das Übermitteln über ein Kommunikationsnetz erfolgen, z. B. das Internet, über ein Local Area Network (LAN), über ein drahtloses Kommunikationsnetz (z. B. gemäß dem Wireless Local Area Network (WLAN) und/oder Bluetooth Standard), über ein Mobilfunknetz (z. B. gemäß dem General Packet Radio Service (GPRS), Universal Mobile Telecommunications System (UMTS), oder Long Term Evolution (LTE)-Standard), oder über eine (z. B. lokale) Funklösung (z. B. gemäß der Long Range Wide Area Network (LoRaWAN) Spezifikation), um nur einige nicht-limitierende Beispiele zu nennen, das zur Kommunikation zwischen den von dem Micro-Grid umfassten Elementen verwendet werden kann. Es versteht sich, dass dies voraussetzt, dass diejenigen Elemente des Micro-Grids, welche miteinander kommunizieren sollen, eine oder mehrere zur derartigen Kommunikation ausgebildete Kommunikationsschnittstellen umfassen oder mit diesen verbindbar sind.

Gemäß einer beispielhaften Ausführungsform aller Aspekte der Erfindung bestehen zumindest zwei Ankopplungspunkte zwischen dem Micro-Grid und dem öffentlichen Stromnetz, wobei die Fahrplaninformation indikativ für einen Mehr- oder Minderbedarf an elektrischer Energie in Bezug auf jeden der Ankopplungspunkte ist, so dass die Steuerungsinformation eine Steuerung und/oder Regelung der steuer- und/oder regelbaren Elemente des Micro-Grids bei den zumindest zwei Ankopplungspunkten des Micro-Grids zu dem öffentlichen Stromnetz ermöglicht.

Es versteht sich, dass auch mehr als zwei Ankopplungspunkte zwischen dem Micro-Grid und dem öffentlichen Stromnetz bestehen können. Über die zumindest zwei Ankopplungspunkte kann jeweils von dem Micro-Grid in das öffentliche Stromnetz, oder vice versa, elektrische Energie transferiert werden.

Gemäß einer beispielhaften Ausführungsform aller Aspekte der Erfindung wird die Steuerungsinformation ferner nach dem erstmaligen Bestimmen adaptiert, wobei eine unerwartete Abweichung des Mehr- oder Minderbedarfs an elektrischer Energie des öffentlichen Stromnetzes gegenüber der Fahrplaninformation mittels der steuer- und/oder regelbarer Elemente des Micro-Grids ausgeglichen wird.

Der eine oder die mehreren Stabilitätsparameter können beispielsweise mehrmals, z. B. im Abstand von einem vordefinierten Zeitintervall, oder ein nach vordefinierten Regeln bestimmtes Zeitintervall, oder aber auch stetig erfasst werden. Für den Fall, dass bereits eine Steuerungsinformation bestimmt ist, umfasst das Verfahren in einer beispielhaften Ausgestaltung ferner:
- Adaption der Steuerung und/oder Regelung der steuer- und/oder regelbaren Elemente unter Berücksichtigung des einen oder der mehreren (aktualisierten) Stabilitätsparameter, wobei z. B. eine neue Steuerungsinformation bestimmt wird, und anschließend diese erneut ausgegeben bzw. deren Ausgabe veranlasst wird.

Dies kann beispielsweise in regelmäßigen (Zeit-)Intervallen oder nach einem vollständigen Durchlauf erfolgen, d. h. nachdem alle Schritte des Verfahrens nach dem ersten Aspekt ausgeführt und/oder gesteuert wurden, so dass z. B. der Stabilität des öffentlichen Stromnetzes eine Priorisierung eingeräumt werden kann. Die Adaption der bestimmten Steuerungsinformation kann dann beispielsweise erfolgen, wenn eine z. B. unerwartete Änderung des einen oder der mehreren erfassbaren Stabilitätsparameter geschehen ist, und um beispielsweise zu vermeiden, dass es zu einem Blackout des öffentlichen Stromnetzes kommt, z. B. eine oder mehrere Lasten des Micro-Grids abgeschaltet oder im Verbrauch herunter geregelt werden, oder die Menge erzeugter elektrischer Energie der von dem Micro-Grid umfassten Erzeugungsanlagen gesteigert oder verringert wird, um nur einige nicht-limitierende Beispiele zu nennen.

Gemäß einer beispielhaften Ausführungsform aller Aspekte der Erfindung umfasst das Verfahren ferner:
- Erhalten oder Bestimmen von einer Prognoseinformation von einem Mehr- oder Minderbedarf über eine vorbestimmte Zeitperiode des Micro-Grids; wobei das Bestimmen der Steuerungsinformation ferner basierend auf der Prognoseinformation erfolgt, so dass die Steuerungsinformation unter Berücksichtigung der Prognoseinformation, der Fahrplaninformation und dem einen oder den mehreren Stabilitätsparametern des öffentlichen Stromnetzes bestimmt wird.

Die Prognoseinformation des Micro-Grids kann beispielsweise erhalten werden, in dem die Prognoseinformation mittels der Kommunikationsschnittstelle (z. B. umfasst von der Steuereinrichtung oder mit dieser (z. B. elektrisch) verbindbar) empfangen wird. Die Prognoseinformation wird beispielsweise von einer weiteren Einrichtung des Micro-Grids bestimmt, indem beispielsweise historische Verbrauchsmengen und/oder Erzeugungsmengen und/oder in einem oder mehreren Speichern des Micro-Grids gespeicherte Mengen elektrischer Energie erfasst (z. B. gemessen) werden, z. B. optional in Abhängigkeit eines Erfassungszeitraums (z. B. Minute, Stunde, Tag, Woche eines Jahres, um nur einige nicht-limitierende Beispiele zu nennen). Alternativ oder zusätzlich kann die zumindest eine Steuereinrichtung die Prognoseinformation selber nach vorstehend beschriebener Art bestimmen. Diese historischen Informationen können beispielsweise in einer Datenbank gespeichert werden. Mittels derartiger historischer Informationen kann beispielsweise ein Verbrauch oder Bedarf elektrischer Energie von von dem Micro-Grid umfassten Lasten, Speichern und/oder Erzeugungsanlagen bestimmt (z. B. berechnet, oder prognostiziert) werden. Entsprechend kann beispielsweise von einem historisch bereits aufgetretenen Verbrauch und/oder Bedarf elektrischer Energie der von dem Micro-Grid umfassten Elemente auf einen zukünftigen Verbrauch und/oder Bedarf elektrischer Energie für das Micro-Grid bzw. für zumindest ein, oder sämtliche Elemente des Micro-Grids geschlossen werden.

Gemäß einer beispielhaften Ausführungsform aller Aspekte der Erfindung umfasst oder repräsentiert die Prognoseinformation ferner eine Prognose des Verbrauchs von den von dem Micro-Grid umfassten Lasten.

Wie bereits vorstehend ausgeführt, ist die Prognose des Verbrauchs beispielsweise indikativ für einen zukünftigen Verbrauch und/oder Bedarf elektrischer Energie für das Micro-Grid bzw. für die bzw. eine jeweilige der von dem Micro-Grid umfassten Lasten, z. B. für einen vorbestimmten (zukünftigen) Zeitraum bzw. ein entsprechendes Zeitintervall. Dieses Zeitintervall kann beispielsweise identisch oder ähnlich zu den EVU-typischen Messzyklen sein. Beispielsweise umfasst das Zeitintervall eine Dauer von 1 min, 5 min, 10 min, 15 min, 20 min, 30 min, 1 Stunde, oder länger für einen bestimmten zukünftigen Wochentag, Monat, oder dergleichen, um nur einige nicht-limitierende Beispiele zu nennen.

Gemäß einer beispielhaften Ausführungsform aller Aspekte der Erfindung realisieren die zumindest zwei Ankopplungspunkte mindestens eine steuerungstechnische Koppelung zwischen dem Micro-Grid und öffentlichen Stromnetz, wobei die steuerungstechnische Kopplung insbesondere eine elektrische Kopplung zwischen dem Micro-Grid und dem öffentlichen Stromnetz ist.

Der zumindest eine Ankoppelungspunkt bzw. jeder Ankopplungspunkt der zumindest zwei Ankopplungspunkte ist insbesondere ein Element, das sowohl von dem Micro-Grid als auch von dem (öffentlichen) Stromnetz gemeinsam genutzt wird. Dies kann beispielsweise ein gemeinsam genutztes Leitungsstück oder ein gemeinsam genutzter Leitungsabschnitt bzw. eine gemeinsam genutzte Leitung, und/oder aber auch eine Verbindungsstelle, die zwischen dem Micro-Grid bzw. einem von dem Micro-Grid umfassten Element und dem (öffentlichen) Stromnetz bzw. einem von dem (öffentlichen) Stromnetz umfassten Element besteht. Es kann sich beispielsweise um eine Koppelleitung von dem Micro-Grid zu dem (öffentlichen) Stromnetz handeln, um nur ein nicht-limitierendes Beispiel zu nennen.

Gemäß einer beispielhaften Ausführungsform aller Aspekte der Erfindung umfassen die Elemente des Micro-Grids eine Vielzahl von Steuer- und/oder regelbaren Lasten (insbesondere 100%ig regelbare Lasten), mindestens einen Energiespeicher, und mindestens eine steuerbare Erzeugungseinheit, oder eine Kombination hiervon.

Gemäß einer beispielhaften Ausführungsform aller Aspekte der Erfindung umfassen die steuerbaren Erzeugungseinheiten zumindest eine Gas-und-Dampf-Erzeugungsanlage, zumindest eine Solar- und/oder Photovoltaik-Erzeugungsanlage, ein Blockheizkraftwerk (insbesondere ein Mikro-Blockheizkraftwerk), oder eine Kombination hiervon.

Derart ist es beispielsweise möglich, ein sogenanntes Demand-Side-Management mittels des Gegenstands nach allen Aspekten durchzuführen. Unter einem derartigen Demand-Side-Management wird im Sinne des vorliegenden Gegenstands verstanden, dass eine Steuerung von den Elementen des Micro-Grids, insbesondere eine Laststeuerung der von dem Micro-Grid umfassten Lasten durchgeführt wird, wobei beispielsweise den Benutzern der Lasten (z. B. Verbraucher, wie Lampen, Klimaanlagen, Wärmepumpen, zu ladende oder geladene und mit dem Micro-Grid verbundene Elektrofahrzeuge, stationäre Speicher oder dergleichen) Anreize geboten werden können, um zu bestimmten Betriebszeiten die Last bzw. die Lasten nach den Anforderungen des öffentlichen Stromnetzes zu steuern. Ein derartiges Demand-Side-Management ermöglicht es gemäß beispielhaften Ausführungsformen des Gegenstands nach allen Aspekten, z. B. Verhaltensmuster der Benutzer der von dem Micro-Grid umfassten Elemente herbeizuführen, um den Einfluss des Micro-Grids (über den zumindest einen Ankopplungspunkt bzw. die zumindest zwei Ankopplungspunkte) insbesondere auf die Stabilität des öffentlichen Stromnetzes bewusst zu steuern und/oder zu regeln (z. B. möglichst gering zu halten).

Gemäß einer beispielhaften Ausführungsform aller Aspekte der Erfindung erfolgt die Steuerung und/oder Regelung für alle Lasten und Erzeugungsanlagen des Micro-Grids. Die bestimmte Steuerungsinformation umfasst beispielsweise mehrere Teile, wobei ein jeder Teil für ein bestimmtes von dem Micro-Grid umfasstes Element eine Information zu dessen Steuerung und/oder Regelung umfasst oder repräsentiert. Alternativ oder zusätzlich kann für jedes von dem Micro-Grid umfasstes Element eine eigene (z. B. separate) Steuerungsinformation bestimmt werden. Es versteht sich, dass für letzteren Fall dann sämtliche bestimmten Steuerungsinformation nach der in dieser Spezifikation beschriebenen Art an das entsprechende Elemente des Micro-Grids ausgegeben bzw. dessen Ausgabe entsprechend veranlasst werden muss.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung;
- Fig. 2:: ein Flussdiagramm einer beispielhaften Ausführungsform eines Verfahrens, das im Kontext der vorliegenden Erfindung beispielsweise von der Einrichtung 110 des Systems der Fig. 1 ausgeführt werden kann; und
- Fig. 3:: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

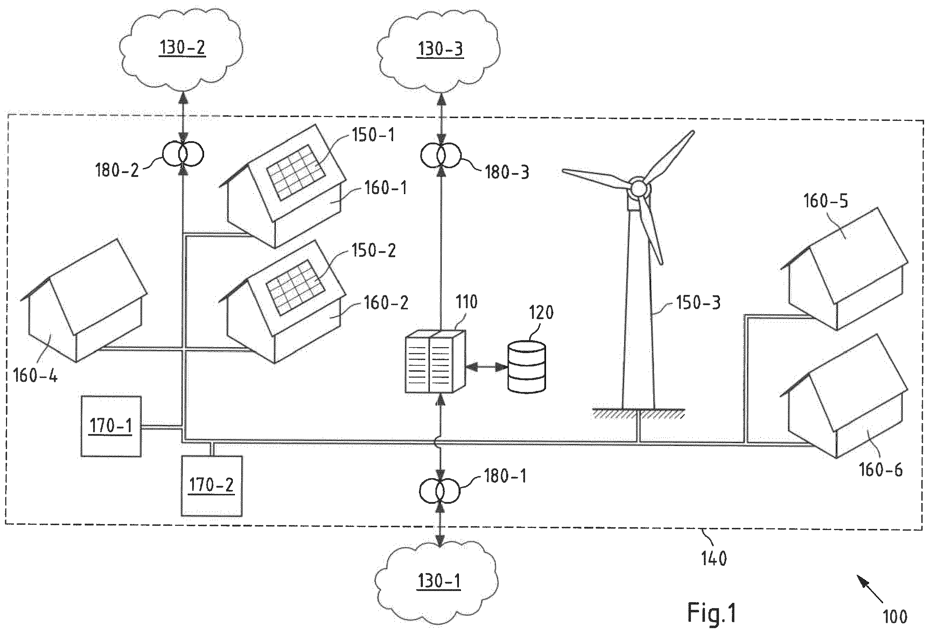

Fig. 1 ist eine schematische Darstellung einer beispielhaften Ausführungsform eines Systems 100 gemäß der vorliegenden Erfindung.

Fig. 1 zeigt ein schematisch dargestelltes Micro-Grid 140 mit vorliegend drei Ankopplungspunkten zu jeweils drei verschiedenen Teilen eines öffentlichen Stromnetzes 130, wobei die Teile mit den Bezugszeichen 130-1, 130-2, sowie 130-3 versehen sind. Die Ankopplungspunkte sind vorliegend jeweils über einen Transformator 180-1, 180-2, 180-3 mit dem (übergeordneten) öffentlichen Stromnetz 130 (z. B. ein Mittelspannungsnetz) verbunden. Das Stromnetz 130 kann mit mehreren von solchen Micro-Grids (in Fig. 1 nicht dargestellt) nach Art des Micro-Grids 140 verbunden sein, wobei wiederrum ein oder mehrere Ankopplungspunkte zwischen einem jeweiligen Micro-Grid und dem Stromnetz 130 bestehen können.

Das Stromnetz 130 kann eine oder mehrere Einrichtungen (in Fig. 1 nicht dargestellt) umfassen, die beispielsweise jeweils eine Sensorik umfassen können, mit denen z. B. Stromparameter (z. B. Messwerte) an Elementen des öffentlichen Stromnetzes (130; Elemente des Stromnetzes sind in Fig. 1 nicht dargestellt) erfasst (z. B. gemessen) werden können. Beispielsweise können derartige Stromparameter an den jeweiligen Transformatoren 180-1, 180-2, 180-3 erfasst werden. Derartige Transformatoren 180-1, 180-2, 180-3 können beispielsweise als elektronische Transformatoren ausgebildet sein. Die Ankopplungspunkte können beispielsweise einen Betrieb eines Gleichstrom (DC) Netzes ermöglichen. In letzterem Fall sind beispielsweise Gleichrichter anstatt der Transformatoren von den jeweiligen Ankopplungspunkten umfasst. Es versteht sich, dass ein jeweiliger entsprechender Ankopplungspunkt alternativ zu dem entsprechenden in Fig. 1 dargestellten Transformator 180-1, 180-2, 180-3 in bestimmten Anwendungsfällen auch gleichwertig durch einen Gleichrichter, Umrichter, oder elektronischen Transformator realisiert sein kann. Derartige erfasste Stromparameter können beispielsweise von einem oder mehreren Stabilitätsparametern, die beispielsweise von einer Netzleitstelle des öffentlichen Stromnetzes bestimmt sind, repräsentiert sein. Dieser eine oder diese mehreren Stabilitätsparameter können beispielsweise von der Steuereinrichtung 110, die von dem Micro-Grid 140 umfasst ist, erhalten werden, indem diese beispielsweise von einer von der Steuereinrichtung 110 umfassten Kommunikationsschnittstelle empfangen werden. Alternativ oder zusätzlich kann die Steuereinrichtung 110 selber derartige Stabilitätsparameter erfassen (z. B. messen), z. B. mit von der Steuereinrichtung 110 umfasster Sensorik, die beispielsweise an den jeweiligen Transformatoren 180-1, 180-2, sowie 180-3 einen oder mehrere Stromparameter erfassen (z. B. messen) können.

Ausgehend von einem jeden der von dem Micro-Grid 140 umfassten Transformatoren 180-1, 180-2, 180-3 erstrecken sich Verteilstränge - die beispielsweise als elektrische Leitungen ausgebildet sind - zu den Hausanschlüssen 160-1 bis 160-6, sowie (z. B. Energie-) Speicher 170-1 bis 170-2, und zudem auch zu den Erzeugungseinrichtungen bzw. Erzeugungsanlagen 150-1 bis 150-3. Vorliegend umfasst das Micro-Grid 140 zwei als Photovoltaikanlage ausgebildete Erzeugungsanlagen 150-1 und 150-2, die jeweils auf dem Dach des den Hausanschluss 160-1, 160-2 umfassenden Hauses angeordnet sind. Das Micro-Grid 140 umfasst zudem eine als Windenergieanlage ausgebildete Erzeugungsanlage 150-3. Die Energiespeicher 170-1, 170-2 sind vorliegend als Batterien bzw. Akkus ausgebildet und erlauben es, Energie in diesen zu speichern, und gespeicherte Energie zum Verbrauch durch von dem Micro-Grid umfasste Elemente, und/oder über einen oder mehrere der Transformatoren 180-1, 180-2,180-3 in das Stromnetz 130 bzw. in einen jeweiligen Teil 130-1, 130-2, 130-3 des öffentlichen Stromnetzes einzuspeisen.

Die Hausanschlüsse 160-1 bis 160-6 sind nicht nur elektrische Verbraucher (Lasten), sondern entsprechend auch teilweise Erzeuger von elektrischer Energie. So sind beispielsweise - wie bereits ausgeführt - die Erzeugungseinrichtungen 150-1 und 150-2 vorliegend als Photovoltaikanlagen ausgebildet, und von den Hausanschlüssen 160-1 sowie 160-2 umfasst.

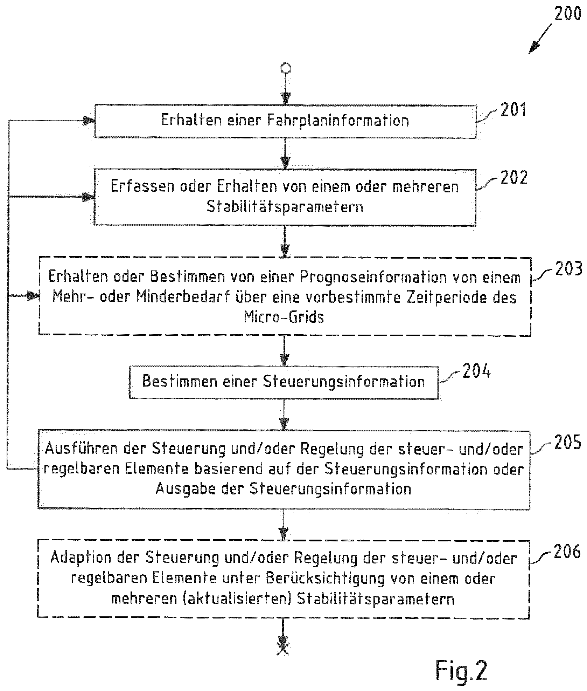

Die Steuereinrichtung 110 ist mit der optionalen Datenbank 120 verbunden. Die Steuereinrichtung 110 führt beispielsweise das Flussdiagramm 200 der Fig. 2 aus. Die Steuereinrichtung 110 kann beispielsweise eine Schalteinrichtung für das Micro-Grid 140 derart ausbilden, so dass es möglich ist, einzelne Elemente des Micro-Grids 140 (vorliegend z. B. Hausanschlüsse 160-1 bis 160-6, Erzeugungseinrichtungen 150-1 bis 150-3, sowie die Speicher 170-1 und 170-2) gezielt mit elektrischer Energie zu versorgen, so dass beispielsweise eine Steuerung und/oder Regelung dieser Elemente des Micro-Grids möglich ist. Die Steuerung und/oder Regelung (vgl. auch Schritt 205 der Fig. 2) dieser Elemente des Micro-Grids erfolgt basierend auf einer Fahrplaninformation, die beispielsweise die Steuereinrichtung 110 erhalten hat (vgl. auch Schritt 201 der Fig. 2).

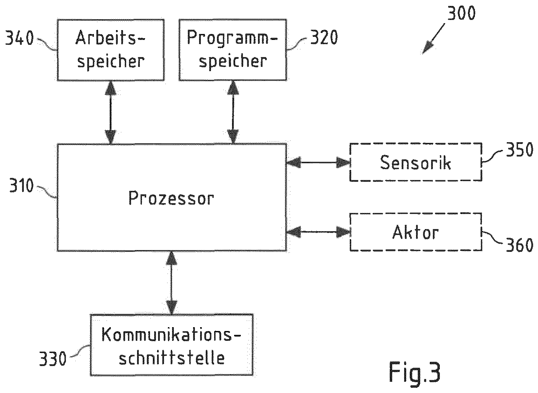

Fig. 2 stellt ein Flussdiagramm 200 einer beispielhaften Ausführungsform eines Verfahrens nach dem ersten Aspekt der vorliegenden Erfindung, das im Kontext der vorliegenden Erfindung beispielsweise von der Steuereinrichtung 110 des Systems der Fig. 1 ausgeführt werden kann. Die Steuereinrichtung 110 kann beispielsweise als Vorrichtung 300 der Fig. 3 ausgebildet sein.

In einem ersten Schritt 201 erfolgt ein Erhalten einer Fahrplaninformation. Die Fahrplaninformation wird beispielsweise von einer von der Steuereinrichtung 110 umfassten Kommunikationsschnittstelle (z. B. Kommunikationsschnittstelle 330 der Vorrichtung 300 nach Fig. 3) erhalten (z. B. empfangen). Die Fahrplaninformation wird beispielsweise von einer Netzleitstelle eines öffentlichen Stromnetzes (z. B Stromnetz 130 nach Fig. 1), mit dem ein Micro-Grid (z. B. Micro-Grid 140 nach Fig. 1), dass die Steuereinrichtung 110 umfasst, verbunden ist, an die Steuereinrichtung 110 übermittelt (z. B. gesendet).

In einem zweiten Schritt 202 erfolgt ein Erfassen oder Erhalten von einem oder mehreren Stabilitätsparametern.

Für den Fall, dass der eine oder die mehreren Stabilitätsparameter erhalten werden, werden diese beispielsweise von einer von der Steuereinrichtung 110 umfassten Kommunikationsschnittstelle (z. B. Kommunikationsschnittstelle 330 der Vorrichtung 300 nach Fig. 3) erhalten (z. B. empfangen). Der eine oder die mehreren Stabilitätsparameter wurden zuvor beispielsweise von der Netzleitstelle des öffentlichen Stromnetzes erfasst (z. B. gemessen), und anschließend an die Steuereinrichtung 110 übermittelt (z. B. gesendet).

Für den Fall, dass der eine oder die mehreren Stabilitätsparameter erfasst werden, umfasst die Steuereinrichtung 110 beispielsweise Sensorik (z. B. Sensorik 350 der Vorrichtung 300 nach Fig. 3), mittels der der eine oder die mehreren Stabilitätsparameter erfasst (z. B. gemessen) werden.

In einem optionalen dritten Schritt 203 erfolgt ein Erhalten oder Bestimmen von einer Prognoseinformation von einem Mehr- oder Minderbedarf über eine vorbestimmte Zeitperiode des Micro-Grids.

Für den Fall, dass die Prognoseinformation erhalten wird, wird diese beispielsweise von einer weiteren Einrichtung des Micro-Grids bestimmt, indem beispielsweise historische Verbrauchsmengen und/oder Erzeugungsmengen und/oder in einem oder mehreren Speichern des Micro-Grids gespeicherte Mengen elektrischer Energie erfasst (z. B. gemessen) werden, z. B. in Abhängigkeit eines Erfassungszeitraums. Die historischen Verbrauchsmengen und/oder Erzeugungsmengen und/oder in einem oder mehreren Speichern des Micro-Grids gespeicherte Mengen elektrischer Energie können beispielsweise erfasst werden, indem diese aktiv von der weiteren Einrichtung des Micro-Grids von den Elementen des Micro-Grids (z. B. Speicher 170-1, 170-2; Erzeugungsanlagen 150-1, 150-2, 150-3; elektrische Verbraucher (Lasten) 160-1 bis 160-6) angefragt werden, oder indem diese von den Elementen des Micro-Grid an die weitere Einrichtung (z. B. automatisch) übermittelt werden. Alternativ kann anstatt einer weiteren Einrichtung des Micro-Grids das Erfassen der Prognoseinformation ebenfalls seitens der Steuereinrichtung 110 gesteuert bzw. ausgeführt werden.

In einem vierten Schritt 204 erfolgt ein Bestimmen einer Steuerungsinformation zumindest teilweise basierend auf den in den Schritten 201 bis 203 erfassten bzw. erhaltenen Informationen. Das Bestimmen der Steuerungsinformation wird seitens der Steuereinrichtung 110 gesteuert bzw. ausgeführt.

In einem fünften Schritt 205 erfolgt ein Ausführen der Steuerung und/oder Regelung der steuer- und/oder regelbaren Elemente des Micro-Grids basierend auf der in dem Schritt 204 bestimmten Steuerungsinformation. Alternativ oder zusätzlich kann eine Ausgabe der in dem Schritt 204 bestimmten Steuerungsinformation erfolgen.

Das Ausführen der Steuerung und/oder Regelung der steuer- und/oder regelbaren Elemente des Micro-Grids erfolgt beispielsweise, in dem die bestimmte Steuerungsinformation (Schritt 204) von der Steuereinrichtung 110 an die entsprechenden zu steuernden bzw. zu regelnden Elemente (z. B. Speicher 170-1, 170-2; Erzeugungsanlagen 150-1,150-2,150-3; elektrische Verbraucher (Lasten) 160-1 bis 160-6) übermittelt werden, z. B. über die von der Steuereinrichtung 110 umfasste Kommunikationsschnittstelle.

In einem optionalen sechsten Schritt 206 erfolgt eine Adaption bzw. ein Adaptieren der Steuerung und/oder Regelung der steuer- und/oder regelbaren Elemente des Micro-Grids, für den Fall, das z. B. geänderte Umstände des öffentlichen Stromnetzes und/oder des Micro-Grids vorliegen. Die geänderten Umstände können sich beispielsweise in einem oder mehreren geänderten Stabilitätsparametern (erfasst in dem Schritt 202) widerspiegeln. Es versteht sich, dass die in den Schritten 201 bis 203 erfassten bzw. erhaltenen Informationen mehrmals, also wiederholt, z. B. in einem Abstand von vordefinierten Zeitintervallen, erfasst oder erhalten werden, so dass eine kontinuierliche Steuerung und/oder Regelung der steuer- und/oder regelbaren Elemente des Micro-Grids erfolgen kann. Dies ist in dem Flussdiagramm 200 schematisch durch die von dem Schritt 205 auf die Schritte 201 bis 203 gerichteten Pfeile dargestellt.

Fig. 3 zeigt eine schematische Darstellung einer beispielhaften Ausführungsform einer Vorrichtung 300, die im Kontext der vorliegenden Erfindung eingesetzt werden kann.

Die Vorrichtung 300 kann beispielsweise die Vorrichtung 110 (Steuereinrichtung) nach Fig. 1 repräsentieren (und dann beispielsweise das Verfahren des Flussdiagramms 200 nach Fig. 2 ausführen). Die Vorrichtung 300 kann beispielsweise auch eine weitere Vorrichtung, die in Fig. 1 von dem Stromnetz 130 umfasst ist, repräsentieren (und dann beispielsweise das Verfahren des Flussdiagramms 200 nach Fig. 2 ausführen, oder alternativ zusammen mit der Vorrichtung 110 nach Fig. 1 das Verfahren des Flussdiagramms 200 nach Fig. 2 ausführen), die beispielsweise das Erfassen der Prognoseinformation (Schritt 203 nach Fig. 2) steuert bzw. ausführt. Ferner kann die Vorrichtung 300 beispielsweise von einem von einem Micro-Grid umfassten Element (z. B. Elemente 150-1 bis 150-3, 160-1 bis 160-6, 170-1 bis 170-2) umfasst sein, insbesondere kann derart mittels eines Aktors 360 eine Steuerung und/oder Regelung des entsprechenden Elementes von dem Micro-Grid erfolgen.

Vorrichtung 300 umfasst einen Prozessor 310 mit zugeordnetem Arbeitsspeicher 340 und Programmspeicher 320. Der Prozessor 310 führt beispielsweise Programmanweisungen aus, die im Programmspeicher 320 gespeichert sind. Die Programmanweisungen führen das Verfahren gemäß dem ersten Aspekt der Erfindung aus und/oder steuern dieses. Damit enthält der Programmspeicher 320 ein Computerprogramm nach einem beispielhaften Aspekt der Erfindung und stellt ein Computerprogrammprodukt zu dessen Speicherung dar. Vorrichtung 300 stellt ein Beispiel einer Vorrichtung gemäß dem zweiten Aspekt der Erfindung dar.

Der Programmspeicher 320 kann beispielsweise ein persistenter Speicher, wie beispielsweise ein Read-Only Memory (ROM)-Speicher sein. Der Programmspeicher 320 kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z. B. eine CD oder DVD). In dem Programmspeicher 320, oder in einem separaten Speicher, können auch weitere Informationen abgespeichert sein.

Der Arbeitsspeicher 340 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor 310 ist ferner operativ mit einer Kommunikationsschnittstelle 330 verbunden, mit der beispielsweise ein Informationsaustausch mit anderen Vorrichtungen möglich ist (siehe z. B. die Pfeile bzw. Verbindungen zwischen den von dem System 100 gemäß Fig. 1 umfassten Entitäten bzw. Elemente).

Die Vorrichtung 300 kann auch weitere Komponenten enthalten oder umfassen. Beispielsweise ist bzw. sind insbesondere eine oder mehrere Sensoriken 350 zur Ermittlung von einem oder mehreren Stabilitätsparametern (vgl. auch Schritt 202 des Flussdiagramms 200 nach Fig. 2) vorhanden, die beispielsweise zur Erfassung (z. B. Messung) von Messwerten an einem Ankopplungspunkt zwischen einem Micro-Grid (z. B. Micro-Grid 140 nach Fig. 1) und einem dem Micro-Grid übergeordneten Stromnetz (z. B. Stromnetz 130 nach Fig. 1) als strukturelle und/oder funktionale Einheit eingerichtet ist bzw. sind und mit dem Prozessor 310 operativ verbunden bzw. von diesem umfasst ist bzw. sind. Die Vorrichtung 300 kann ferner einen oder mehrere Aktoren 360 als strukturelle und/oder funktionale Einheit(en) umfassen, die mit dem Prozessor 310 operativ verbunden sind. Der Aktor 360 kann beispielsweise konfiguriert sein, eine Steuerung und/oder Regelung von einem von dem Micro-Grid umfassten Element zu bewirken (vgl. auch Schritt 205 des Flussdiagramms 200 nach Fig. 2).

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt von einer Steuereinrichtung, die von einem Micro-Grid umfasst ist, umfassend:
- Erhalten einer Fahrplaninformation indikativ für eine oder mehrere Prognosen über zumindest eine vorbestimmte Zeitperiode, mit der ein dem Micro-Grid vorgelagertes öffentliches Stromnetz über zumindest einen Ankopplungspunkt zwischen dem Micro-Grid und dem öffentlichen Stromnetz einen prognostizierten Mehr- oder Minderbedarf an elektrischer Energie zum Ausgleich anfordert, so dass basierend auf der Fahrplaninformation eine Steuerung und/oder Regelung von von dem Micro-Grid umfassten steuer- und/oder regelbaren Elementen derart durchgeführt wird, dass der Mehr- oder Minderbedarf an elektrischer Energie ausgeglichen wird;
- Bestimmen einer Steuerungsinformation indikativ für eine Steuerung und/oder Regelung der von dem Micro-Grid umfassten steuer- und/oder regelbaren Elemente, wobei die Steuerungsinformation zumindest teilweise basierend auf der Fahrplaninformation und auf einem oder mehreren erfassten oder erhaltenen Stabilitätsparametern des übergeordneten öffentlichen Stromnetzes bestimmt wird, wobei der eine oder die mehreren Stabilitätsparameter indikativ für an dem zumindest einen Ankopplungspunkt einzuhaltende Stromparameter ist bzw. sind, so dass die Steuerungsinformation derart bestimmt ist, dass eine Differenz zwischen dem gemäß der Fahrplaninformation angeforderten Mehr- oder Minderbedarf an elektrischer Energie und der gemäß des einen oder der mehreren Stabilitätsparameter geforderten Stabilität des öffentlichen Stromnetzes bei der Steuerung oder Regelung der von dem Micro-Grid umfassten steuer- und/oder regelbaren Elemente berücksichtigt wird;
- Ausführen der Steuerung und/oder Regelung der steuer- und/oder regelbaren Elemente basierend auf der Steuerungsinformation oder Ausgabe der Steuerungsinformation, so dass die Steuerung und/oder Regelung der steuer- und/oder regelbaren Elemente des Micro-Grids veranlasst wird.

2. Verfahren nach Anspruch 1, wobei zumindest zwei Ankopplungspunkte zwischen dem Micro-Grid und dem öffentlichen Stromnetz bestehen, wobei die Fahrplaninformation indikativ für einen Mehr- oder Minderbedarf an elektrischer Energie in Bezug auf jeden der Ankopplungspunkte ist, so dass die Steuerungsinformation eine Steuerung und/oder Regelung der steuer- und/oder regelbaren Elemente des Micro-Grids bei den zumindest zwei Ankopplungspunkten des Micro-Grids zu dem öffentlichen Stromnetz ermöglicht.

3. Verfahren nach einem der vorhergehenden Ansprüche, wobei die Steuerungsinformation ferner nach dem erstmaligen Bestimmen adaptiert wird, wobei eine unerwartete Abweichung des Mehr- oder Minderbedarfs an elektrischer Energie des öffentlichen Stromnetzes gegenüber der Fahrplaninformation mittels der steuer- und/oder regelbarer Elemente des Micro-Grids ausgeglichen wird.

4. Verfahren nach einem der vorhergehenden Ansprüche, ferner umfassend:
- Erhalten oder Bestimmen von einer Prognoseinformation von einem Mehr- oder Minderbedarf über eine vorbestimmte Zeitperiode des Micro-Grids;
wobei das Bestimmen der Steuerungsinformation ferner basierend auf der Prognoseinformation erfolgt, so dass die Steuerungsinformation unter Berücksichtigung der Prognoseinformation, der Fahrplaninformation und dem einen oder den mehreren Stabilitätsparametern des öffentlichen Stromnetzes bestimmt wird.

5. Verfahren nach einem der Ansprüche 2 bis 4, wobei die zumindest zwei Ankopplungspunkte mindestens eine steuerungstechnische Koppelung zwischen dem Micro-Grid und öffentlichen Stromnetz realisieren, wobei die steuerungstechnische Kopplung insbesondere eine elektrische Kopplung zwischen dem Micro-Grid und dem öffentlichen Stromnetz ist.

6. Verfahren nach Anspruch 4 oder Anspruch 5, wobei die Prognoseinformation ferner eine Prognose des Verbrauchs von den von dem Micro-Grid umfassten Lasten umfasst oder repräsentiert.

7. Verfahren nach einem der vorhergehenden Ansprüche, wobei die Elemente des Micro-Grids eine Vielzahl von regelbaren Lasten, mindestens einen Energiespeicher, und mindestens eine steuerbare Erzeugungseinheit, oder eine Kombination hiervon umfassen.

8. Verfahren nach einem der vorhergehenden Ansprüche, wobei die steuerbaren Erzeugungseinheiten zumindest eine Gas-und-Dampf-Erzeugungsanlage, zumindest eine Solar- und/oder Photovoltaik-Erzeugungsanlage, oder eine Kombination hiervon umfassen.

9. Verfahren nach Anspruch 7 oder Anspruch 8, wobei die Steuerung und/oder Regelung für alle Lasten und Erzeugungsanlagen des Micro-Grids erfolgt.

10. Vorrichtung, eingerichtet zur Ausführung und/oder Steuerung des Verfahrens nach einem der Ansprüche 1 bis 9 oder umfassend jeweilige Mittel zur Ausführung und/oder Steuerung der Schritte des Verfahrens nach einem der Ansprüche 1 bis 9.

11. Vorrichtung nach Anspruch 10, wobei die Vorrichtung räumlich nahe ist bzw. eine räumliche Nähe zu den von dem Micro-Grid umfassten steuer- und/oder regelbaren Elementen derart aufweist, dass keine Elemente des öffentlichen Stromnetzes zwischen diesen angeordnet sind.

12. System, umfassend:
- zumindest eine Vorrichtung nach einem der Ansprüche 10 oder 11; und
- ein oder mehrere von einem über zumindest einen Ankopplungspunkt mit einem öffentlichen Stromnetz verbundenen Micro-Grid umfassten steuer- und/oder regelbare Elemente;
- wobei die zumindest eine Vorrichtung und das eine oder die mehreren Elemente von dem Micro-Grid umfasst sind.

13. Computerprogramm, umfassend Programmanweisungen, die einen Prozessor zur Ausführung und/oder Steuerung des Verfahrens gemäß einem der Ansprüche 1 bis 9 veranlassen, wenn das Computerprogramm auf dem Prozessor läuft.
